# EUROPEAN PATENT SPECIFICATION

(11) **EP 3 786 189 B1**
(45) Date of publication and mention of the grant of the patent: **09.03.2022**
(21) Application number: 19382731.8
(22) Date of filing: 28.08.2019
(51) Int. Cl.: C08B 11/02, H01B 1/12

(54) **ELECTROCHEMICALLY ACTIVE NANOPARTICULATED POLYMER MATERIAL**
ELEKTROCHEMISCH AKTIVES NANOPARTIKULÄRES POLYMERMATERIAL
MATÉRIAU POLYMÈRE NANOPARTICULÉ ÉLECTROCHIMIQUEMENT ACTIF

(43) Date of publication of application: 03.03.2021
(73) Proprietor: Consejo Superior De Investigaciones Científicas, 28006 Madrid (ES)
(72) Inventor: CARRETERO GONZÁLEZ, Javier, 28006 Madrid (ES); FERNÁNDEZ BENITO, Amparo, 28006 Madrid (ES); RODRIGUEZ CABALLERO, Daniel, 28006 Madrid (ES); RODRIGUEZ RODRIGUEZ, Giovanna, 28006 Madrid (ES); LÓPEZ MANCHADO, Miguel Ángel, 28006 Madrid (ES)
(74) Representative: Pons

(56) References cited:
- WO-A1-2012/150900
- NIRMALE TRUPTI C ET AL: "A review on cellulose and lignin based binders and electrodes: Small steps towards a sustainable lithium ion battery", INTERNATIONAL JOURNAL OF BIOLOGICAL MACROMOLECULES, ELSEVIER BV, NL, vol. 103, 26 May 2017 (2017-05-26), pages 1032-1043, XP085146652, ISSN: 0141-8130, DOI: 10.1016/J.IJBIOMAC.2017.05.155
- ROBERT B BJORKLUND ET AL: "Electrically Conducting Composites of Colloidal Polypyrrole and Methylcellulose", J. CHEM. SOC., CHEM. COMMUN,, 1 January 1986 (1986-01-01), pages 1293-1295, XP001382220,
- Claudia Sasso: "Polypyrrole and polypyrrole/wood-derived materials conducting composites: A review", , 1 August 2011 (2011-08-01), XP55666018, Retrieved from the Internet: URL:https://www.researchgate.net/profile/M ichel_Petit-Conil/publication/265417579_Po lypyrrole_and_polypyrrolewood-derived_mate rials_conducting_composites_A_review/links /57c70d1d08aefc4af34c7a80/Polypyrrole-and- polypyrrole-wood-derived-materials-conduct ing-composites-A-review.pdf [retrieved on 2020-02-06]
- SASSO: "Use of wood derivatives as doping / dispersing agents in the preparation of polypyrrole aqueous dispersions", BIORESOURCES, vol. 3, no. 4, 1 January 2008 (2008-01-01) , pages 1187-1195, XP055035654, ISSN: 1930-2126
- CHAO YANG ET AL: "Water-Dispersed Conductive Polypyrroles Doped with Lignosulfonate and the Weak Temperature Dependence of Electrical Conductivity", INDUSTRIAL & ENGINEERING CHEMISTRY RESEARCH, vol. 48, no. 21, 4 November 2009 (2009-11-04), pages 9498-9503, XP55666043, ISSN: 0888-5885, DOI: 10.1021/ie900189j

## Description

The present invention relates to an electrochemically active nanoparticulate polymer material comprising methylcellulose, sulfonated lignin and polypyrrole with a hierarchical structure and method of obtaining thereof, for use as an electrochemical material dispersed in an aqueous medium. The present invention belongs to the field of sustainable electrochemical systems mainly for converting and storing energy from renewable sources and capturing and transporting CO₂ gas from the combustion of fossil fuels in the industry sector.

### BACKGROUND OF THE INVENTION

Due to current needs related to the optimised use and accumulation of energy from the main renewable energy sources, Solar and Wind, from photovoltaic cells and wind turbines, respectively, such that excess energy is stored for use during peak demand hours, the development and use of efficient, cheap, safe and long-lasting batteries is required.

In order to enhance battery performance, one of the strategies adopted by researchers is the creation of electroactive materials on a nanometric scale. When particle size or electrode thickness falls below 100 nanometres, the diffusion of ions between active sites increases due to the decrease in the distance between them, while the amount of available surface charge increases. Furthermore, the ions will easily access the redox-active centres in the nanoparticle and also through the thin-film electrode structures, enabling near-theoretical capacities, even at high cycle speeds. The nanostructured electrodes can also hold high current densities without being pulverised, providing good electronic contact between the electrode and the current collector during cycling, extending the battery's useful life.

However, the manufacture of nanostructured electrodes and electroactive nanoparticles normally involves the application of complex synthesis routes with several steps and the presence of harmful chemical substances. Furthermore, these methods usually provide a very low amount of functional material, which makes the overall process very expensive and difficult to scale. Electroactive nanoparticles usually have low density, which creates a challenge for packaging them into very compact electrodes, since the possibility of improving battery volumetric energy density decreases.

Redox flow batteries are an effective system of balancing the fluctuations in the renewable energy supply, thereby guaranteeing the permanent availability thereof. This would limit and/or minimise CO₂ emissions into the atmosphere, which is the pollutant product of non-renewable energy sources.

A redox flow battery is an electrochemical storage device that makes it possible to convert electricity and store it as chemical energy, inverting the process in a controlled manner when necessary. Flow batteries store energy in chemical fluids contained in two independent external tanks instead of in the battery case itself, so the amount of energy that can be stored is exclusively limited by the size of said external tanks. The larger the external tanks, the larger the amount of electrolyte present therein and, therefore, the more energy we can store. Furthermore, the larger the amount of stacked reaction cells, the higher the speed of generation of said chemical energy.

The application of electroactive particles flowing continuously from the external tanks to the inside of the electrochemical cell will increase the battery capacity and power. The main reason for this increase is the decrease in the distances between the ions and active centres in the particles. Compared to the use of thin-film electrodes in traditional batteries, wherein energy and power are coupled indistinguishably, the use of electroactive nanoparticles is a fundamental breakthrough, since a larger amount of energy can be stored. Furthermore, if the density of these nanoparticles is high, the volumetric energy will also be high. However, one of the limitations in relation to the amount of energy stored in these systems is the low dispersibility of the redox material in the liquid phase. Normally, organic solvents are used to maximize the concentration of the electroactive materials and the potential window, but this option increases the cost of the battery system and reduces its safety. Furthermore, the use of organic solvents reduces the mobility of the electrolyte ions and, therefore, the possibility of applying high current densities that make it possible to obtain high battery power values. Therefore, in order to obtain an electrochemical system for large-scale renewable energy storage that is efficient, economically viable and safe for the user, non-organic solvents must be used.

The application of suspensions of particles with electroactive properties will also make it possible to replace the ion-conducting membranes currently used by other, much cheaper ones such as dialysis membranes which incorporate a size exclusion mechanism.

### DESCRIPTION OF THE INVENTION

The present invention provides a new electrochemically active nanoparticulate polymer material characterized in that it comprises methylcellulose, sulfonated lignin and polypyrrole, and a method of obtaining thereof. The material has a hybrid, hierarchical structure wherein the macromolecular chains of a conjugated electron- and ion-conducting polymer and redox polymer are arranged in an interpenetrated manner. Additionally, they are coated with a third water-soluble polymer. Accordingly, the material of the present invention makes it possible to obtain an electrochemical system for large-scale renewable energy storage that is efficient and safe for a user using water as the main solvent.

The advantages of the material of the present invention are:
- capacity to form stable dispersions of the material in an aqueous medium;
- chemical bifunctionality such as the production of a clean, non-fossil fuel and the possibility of storing electricity in the same material structure;
- absence of, scarce, expensive and toxic metals; and
- use of products to obtain them, which are inexpensive, abundant, renewable, biodegradable and biocompatible.

In a first aspect, the present invention relates to a method for obtaining an electrochemically active nanoparticulate polymer material, characterized in that it comprises the following stages:
a) dissolving an amount expressed as a percentage by weight of the final total weight of the nanoparticulate polymer material between 10% and 70% of methylcellulose in deionized water at a temperature between 50°C and 70°C under agitation at revolutions between 50 rpm and 1,500 rpm and, once dissolved, cooling at a temperature between 5°C and 35°C;
b) adding an amount expressed as a percentage by weight of the final total weight of the nanoparticulate polymer material between 10% and 70% of sulfonated lignin in the solution obtained in stage (a);
c) adding an amount expressed as a percentage by weight of the final total weight of the nanoparticulate polymer material between 10% and 70% of pyrrole drop by drop to the solution obtained in stage (b) and, next, adding a catalyst of the polymerisation reaction and agitating at revolutions between 50 rpm and 1,500 rpm for a period of time between 5 h and 7 h;
d) purifying the mixture obtained in stage (c);
e) washing the gel phase obtained in stage (d);
f) repeating stages (d) and (e) at least three times; and
g) drying the gel phase obtained in stage (f).

In a preferred embodiment of the method, the sulfonated lignin has a sulfur percentage between 2.5% and 5% by weight of the total amount of lignin.

In a more preferred embodiment of the method, the sulfonated lignin has a percentage of sulfur between 3.5 % and 5% by weight of the total amount of lignin. The higher the sulfur content of the sulfonated lignin, the higher the content of polypyrrole in the final % by weight of the material and the smaller the average size of the nanoparticles of the material obtained using the method of the invention. This is due to the interactions between the positive charges in the pyrrole monomer ring and the negative charges of the sulfonic anions anchored onto the lignin chains, which achieve a highly efficient assembly between the two macromolecular networks during the polymerization reaction.

In another preferred embodiment of the method, the catalyst added in stage (c) is selected from FeCl₃, CuCl₂, Fe(SO₄)₃, K3Fe(CN)6, Fe(NO₃)₃·9H₂O, Cu(NO₃)₂, Cu(NO₃)₂-AlCl₃, Ag(NO₃), para-toluenesulfonic acid (tosylates), organic and alkali metal salts of the persulfate (S₂O₈²⁻) and sodium dodecyl sulfate (C₁₂H₂₅NaO₄S) anion.

In another preferred embodiment, the purification of stage (d) is carried out by gelation at a temperature between 80°C and 90°C for a period of time between 80 min and 100 min, and the gel phase is subsequently separated from the aqueous phase.

In another preferred embodiment, the washing of stage (e) is carried out using deionized water and with centrifugation at a speed between 1,000 rpm and 10,000 rpm for 10 min, and the gel phase is subsequently separated from the liquid phase.

In another preferred embodiment, the drying of the phase (g) is carried out by lyophilization.

In another more preferred embodiment, lyophilization comprises the stages of
i) freezing the material purified after stage (f) at a temperature between - 195.8°C and 0°C;
ii) drying the sample obtained in stage (i) in a vacuum at a pressure between 10⁻¹ mbar and 10⁻⁶ mbar; and
iii) dehydrating the sample obtained in stage (ii) in a vacuum at a pressure between 10⁻¹ mbar and 10⁻⁶ mbar.

This controlled drying is carried out slowly at low temperatures using the lyophilization technique to avoid cross-linking of the different polymer chains that constitute the compound material, otherwise the material becomes crosslinked and loses its dispersibility properties in an aqueous medium. Additionally, said lyophilization avoids having to obtain an agglomerated material in which the contour of the particles that form the material is not defined or delimited.

A second aspect of the invention relates to an electrochemically active nanoparticulate polymer material obtained using the method described in the present invention. The polymer material is characterized in that it has a pore size between 0.80 nm and 0.99 nm; and in that it comprises a plurality of nanoparticles and a plurality of nanoparticle aggregates, wherein the size of the nanoparticle aggregates is between 100 nm and 250 nm, and wherein the nanoparticles have a size between 1 nm and 20 nm, a hierarchical morphology and are formed by the following polymers:
- a first methylcellulose polymer, in the form of nanofibres, preferably in a proportion by weight of the total weight of the nanoparticulate polymer material between 10% and 70%;
- a second polypyrrole polymer; preferably in a proportion by weight of the total weight of the nanoparticulate polymer material between 10% and 70%; and
- a third sulfonated lignin polymer, preferably with a percentage by weight of sulfur between 2.5% and 5% of the total amount of lignin, and more preferably in a proportion by weight of the total weight of the nanoparticulate polymer material between 10% and 70%;

wherein the total sum of the percentage by weight of the first, second and third polymer is 100%;
and wherein said hierarchical morphology is a structure that follows an essentially longitudinal direction having a size between 200 nm and 2 µm, and another that follows an essentially transverse direction having a size between 200 nm and 400 nm, wherein the nanoparticles are randomly arranged along the essentially longitudinal direction and are joined together by means of the nanofibres of the first polymer, and the nanoparticle aggregates are arranged in an essentially transverse manner to the essentially longitudinal direction.

The hierarchical structure or morphology of the present invention is described with a primary structure of the individual methylcellulose, polypyrrole and sulfonated lignin molecules; a secondary structure of the nanoparticles formed by the primary structure, wherein said nanoparticles additionally form aggregates of a size between 100 nm and 250 nm; and a tertiary structure of the nanoparticle sequence and aggregates of said nanoparticles forming nanoparticle chains serially connected in a pearl-necklace structure, through the nanofibres of the first polymer. Due to the close connectivity between the nanoparticles, the charge transfer in the polymer material is more efficient. The nanoparticulate polymer material is therefore a material wherein each of the individual polymers constitutes a primary structure and its assembly will give rise to the creation of the polymer nanoparticles having a size between 1 nm and 20 nm, and aggregates thereof, secondary structure. Said nanoparticles and nanoparticle aggregates are joined together by means of methylcellulose nanofibres, constituting an assembly with an isotropic structure (tertiary structure), similar to the structure of the beads of a necklace, having a size between 200 nm and 2 µm in the longitudinal direction and between 200 nm and 450 nm in the direction with the shortest or transverse length.

Therefore, said hierarchical structure or morphology of the electrochemically active nanoparticulate material has the aforementioned pearl-necklace or chain nanoparticle assemblies. When the sulfonated lignin is present in the composition of the nanoparticles, their size is an order of magnitude smaller than in particulate polymer materials wherein it is absent and only comprises the other two components, methylcellulose and polypyrrole. The presence of the cellulose component in the electrochemically active nanoparticulate material is crucial in the genesis of the individual particles and in their assembly to form the chains. Methylcellulose acts as a substrate for the initial growth of the conjugated polymer cores (polypyrrole), favouring the subsequent incorporation and consequent growth of the polymer chain in the nanoparticle network. Methylcellulose also acts as a binder of the individual particles, favouring the connectivity between them and, therefore, the organization of the structures in the form of a chain or pearl necklace. Furthermore, methylcellulose has a major impact on the formation of aggregates of the largest nanoparticles, since its absence causes the loss of sphericity of the nanoparticles, as evidenced in samples containing only polypyrrole and highly sulfonated lignin.

The macromolecular polypyrrole and lignin networks interact inside each of the individual particles through the positive charges of the pyrrole monomer ring and the negative charges of the sulfonic anions anchored onto the lignin chains. This interaction enables efficient cohesion between the two macromolecular networks during and after the polymerization reaction. The spatial distribution of each of the macromolecules in the nanoparticle by means of energy-dispersive X-ray spectroscopy of nitrogen, carbon and sulfur during the transmission electron microscopy analysis of the compound polymer materials shows a homogeneous distribution of the three elements in the polymer nanoparticle of the nanoparticulate polymer material of the present invention, confirming that the three macromolecules are homogeneously distributed forming an interpenetrated network in the electrochemically active nanoparticulate material.

A suspension of this hierarchical nanomaterial is capable of developing two sets of reversible redox reactions separated there between by 0.7 V when a potential differential is applied. One of the processes corresponds to the redox reaction of the quinone groups in the lignin, and the other to a potential that appears at lower values and which is related to a reversible hydrogen reduction/oxidation catalytic reaction. The stability of the nanoparticles of the material of the present invention in water does not directly depend on the acid-base properties or ionization potential of the material obtained, all dependent on the functional groups present on the surface, but rather on methylcellulose, since not only does it act as a binder favouring connectivity between each nanoparticle throughout the chain (tertiary structure) and a nucleating agent during nanoparticle synthesis favouring their formation, but it also acts as a dispersing agent favouring the stability of the nanostructured solid in an aqueous medium. Such that the use of surfactants, emulsifiers or other type of chemical agent is not required to stabilize the suspensions of electrochemically active nanoparticulate material due to the presence of methylcellulose in the nanoparticles of the polymer material of the present invention.

The content of quinone redox groups in the nanoparticulate material was determined by means of the electrochemical analysis of solid thin-film electrodes. Said content in electrochemically active functional groups is determined by means of cyclic voltammetry. Furthermore, the value of the charge corresponding to the oxidation and reduction of polypyrrole is determined through the analysis of said experiments. Both values are determined from the integration of the anode and cathode regions of the cyclic voltammetry. The results indicate that the nanoparticulate sample containing the three macromolecular components has higher capacitance resulting from the quinone-type electroactive groups present in the lignin. The capacitance of the nanoparticulate polymer material of the present invention is 1.62 10⁻⁵ C compared to a value of 5.33 10⁻⁶ C for a material composed of polypyrrole and lignin (PLH), said value being of an order of magnitude smaller than that corresponding to the nanoparticulate sample containing the three polymers. The charge assigned to the polypyrrole component was evaluated based on the analysis of cyclic voltammetry considering the percentage by weight of polypyrrole in each of the nanoparticulate materials. The charge values obtained and directly related to the storage capacity of the polypyrrole component in the nanoparticulate material were 350 C/g for the PLH sample and 157 C/g for the material of the present invention.

The presence of nanopores in the nanoparticulate compound material significantly increases the surface/volume ratio of the material. This facilitates molecular contact between the particle surface and chemical species such as water, carbon dioxide, oxygen, hydrogen or electrolyte ions if in solution, facilitating the catalytic, chemical and electrochemical reactions.

In a preferred embodiment of the electrochemically active nanoparticulate polymer material, the third sulfonated lignin polymer has a percentage by weight of sulfur between 3.5% and 5%. The advantage of this sulfur content is the increased stability of the nanoparticulate material obtained from this lignin in an aqueous medium, up to one week, compared to the stability of the material with a sulfur content between 2.5% and 3.4%, which is only between 48 h and 72 h. The excess or fraction of free sulfonic groups promote the solubility and dispersibility of the polymer material in water compared to samples with a lower number of sulfonic groups interacting with the positive charge of the pyrrole.

In a preferred embodiment of the material of the present invention, the surface area of the polymer material is between 10 m² and 230 m² measured by CO₂ gas adsorption.

A third aspect of the invention relates to the use of the electrochemically active nanoparticulate polymer material described in the present invention as an electrolyte in redox batteries that use water as a solvent.

The advantages of using this material in said batteries are those explained above, and which is also advantageous for the safety of the device since organic solvents are not used, thereby preventing the accumulation of inflammable solvents.

A fourth aspect relates to the use of the electrochemically active nanoparticulate polymer material described in the present invention as active material in reversible CO₂ capture and transport reactions.

Throughout the description and the claims, the word "comprises" and its variants do not intend to exclude other technical features, additives, components or steps. For those skilled in the art, other objects, advantages and features of the invention may be inferred from both the description and the embodiment of the invention. The following examples and figures are provided by way of example and are not intended to limit the present invention.

### BRIEF DESCRIPTION OF THE FIGURES

**FIG. 1** shows scanning micrography of the nanoparticulate polymer material containing methylcellulose, sulfonated lignin and polypyrrole (MPHL).
**FIG. 2** shows transmission micrography of the nanoparticulate polymer material containing methylcellulose + sulfonated lignin + polypyrrole (MPLH).
**FIG. 3** shows transmission micrography of the nanoparticulate polymer material containing methylcellulose, sulfonated lignin and polypyrrole (MPHL).
**FIG. 4** shows scanning micrography of the nanoparticulate polymer material containing methylcellulose and polypyrrole (MP).
**FIG. 5** shows transmission micrography of the nanoparticulate polymer material containing methylcellulose and polypyrrole (MP).
**FIG. 6** shows transmission micrography of the nanoparticulate polymer material containing methylcellulose and polypyrrole (MP).
**FIG. 7** shows scanning micrography of the nanoparticulate polymer material containing polypyrrole and lignin (PLH).
**FIG. 8** shows transmission micrography of the nanoparticulate polymer material containing polypyrrole and lignin (PLH).
**FIG. 9** shows transmission micrography of the nanoparticulate polymer material containing polypyrrole and lignin (PLH).
**FIG. 10** shows energy-dispersive X-ray spectroscopy of carbon, nitrogen and sulfur contained in the polymer nanoparticles MPLH.
**FIG. 11** shows cyclic voltammetry in an aqueous medium of solid thin-film electrodes of the developed nanoparticulate materials containing methylcellulose, sulfonated lignin and polypyrrole (MPLH) and polypyrrole + lignin (PLH).
**FIG. 12** shows scanning and transmission micrography of the nanoparticulate polymer material containing cellulose + lignin (1% sulfur) + polypyrrole.
**FIG. 13** shows dynamic light scattering measurements of the nanoparticulate polymer materials. Figure A corresponds to the nanoparticles of the polymer material comprising lignin, polypyrrole and cellulose and figure B corresponds to the particles of the material composed of two lignin and polypyrrole polymers.
**FIG. 14** shows the CO₂ adsorption isotherms of a series of electroactive polymer materials.
**FIG. 15** shows the study of the properties of Zeta Potential and mmoles of H⁺ and OH of the electroactive nanoparticle material containing cellulose + polypyrrole + lignin.
**FIG. 16** shows the electrochemical properties of the compound nanoparticulate polymer suspension MPLH containing the three constituents (lignin+polypyrrole+cellulose) in an aqueous medium. (A) cyclic voltammetry and (B) dependence on the pH of the aqueous electrolyte of the electrochemical potential to which the redox processes evidenced in the nanoparticle suspension give rise.
**FIG. 17** shows cyclic voltammetry wherein electrochemical CO₂ capture in an aqueous and organic medium is shown.

### EXAMPLES

Next, the invention will be illustrated by means of assays carried out by the inventors that demonstrate the effectiveness of the product of the invention.

### Example 1.

Method for preparing the electrochemically active nanoparticulate polymer material.

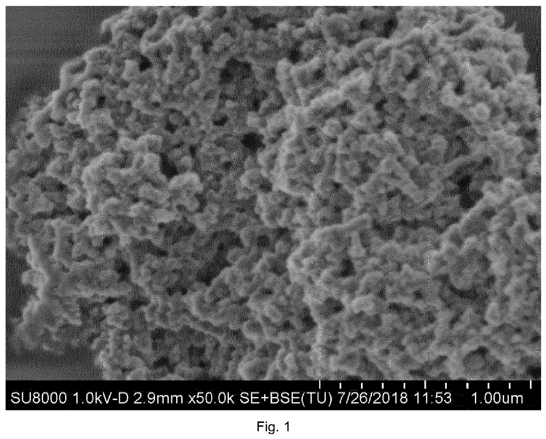

0.16 g of methylcellulose (Sigma-Aldrich) are dissolved in deionized water (200 ml) at 60°C for 60 minutes. After cooling at room temperature, 1 g of lignin biopolymer (Sigma-Aldrich), with a sulfonic group content in its composition of 5% by weight of sulfur, 0.25 g of pyrrole monomer (Sigma-Aldrich) and 0.5 g of FeCl₃ (Sigma-Aldrich), was added progressively as a catalyst. It is mixed for 1 hour and the solution immediately turns black, which indicates the start of polymerization. After a few minutes, a black solid precipitates at the bottom of the reaction flask, while the solution turns yellow due mainly to the presence of FeCl₂. The solid is separated by centrifugation. Next, the solid is washed with deionized water and is centrifuged again. This process is repeated three times. Next, the solid was lyophilized for 12 hours and stored in the refrigerator at 2°C. The material obtained using this method is characterized by high-resolution transmission electron microscopy, as can be observed in Figure 1.

### Example 2.

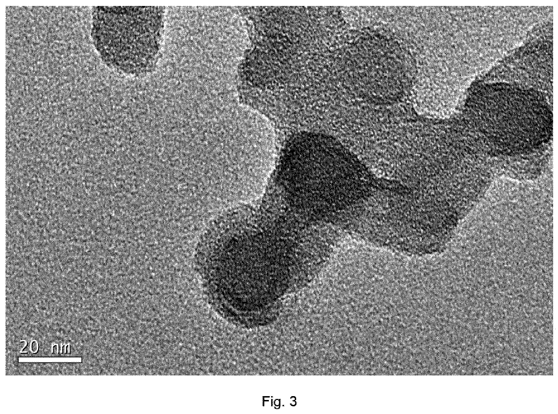

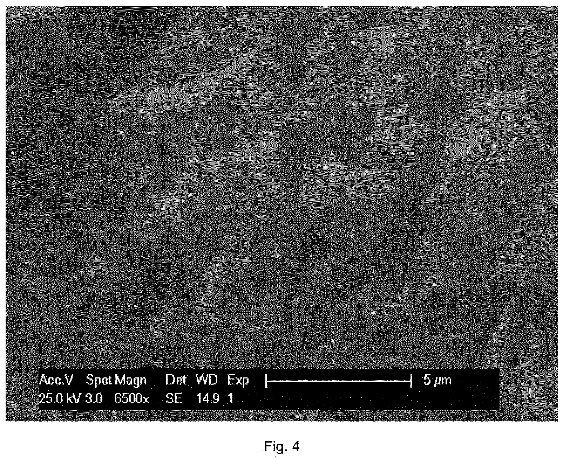

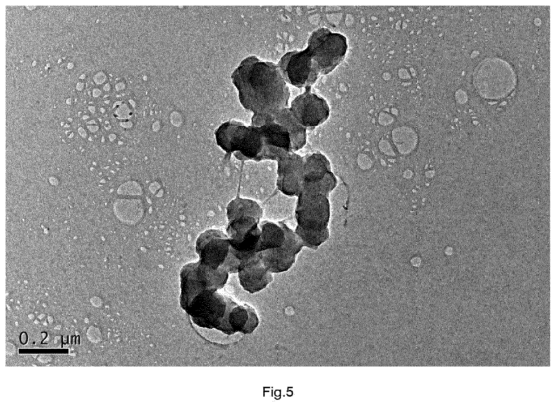

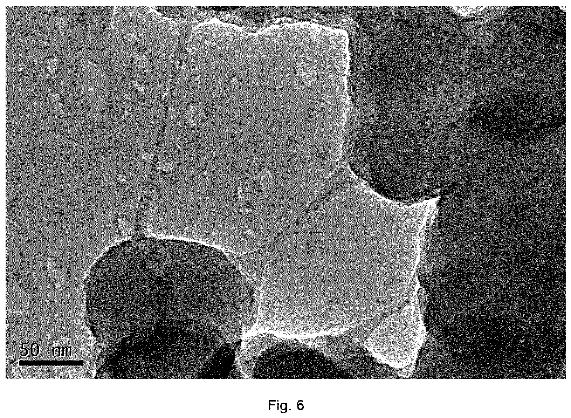

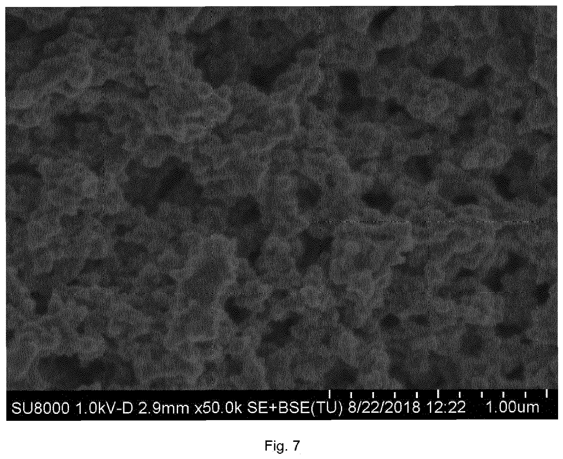

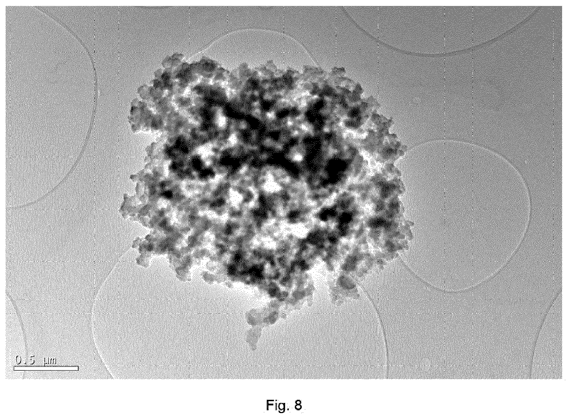

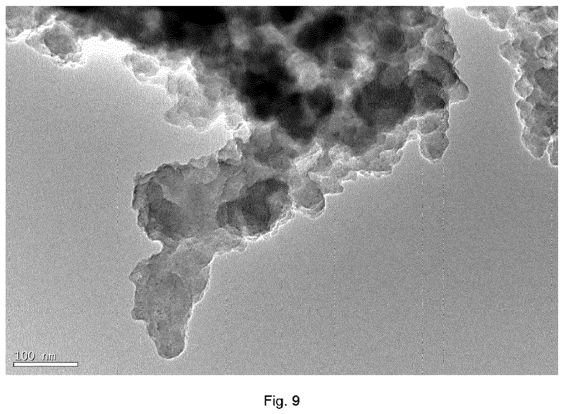

The electrochemically active nanoparticulate polymer obtained using the method of example 1, which comprises nanoparticles having an average size of 20 nm with a ratio of each of the components comprised between a minimum value of 10% and a maximum value of 70%, such that the total sum of the three is 100%, are included in Figures 1 to 3. The effect of the constituents on the polymer material structure is crucial on the final structure of the compound polymer material and to its properties. The polymer material composed of cellulose and polypyrrole also forms particles, but with a size of one order of magnitude higher (Figures 4 to 6). The polymer material constituted by polypyrrole and lignin forms a structure without a structural hierarchy based on the formation of aggregates wherein the primary particles inside said aggregates do not have a defined shape (Figures 7 to 9).

### Example 3

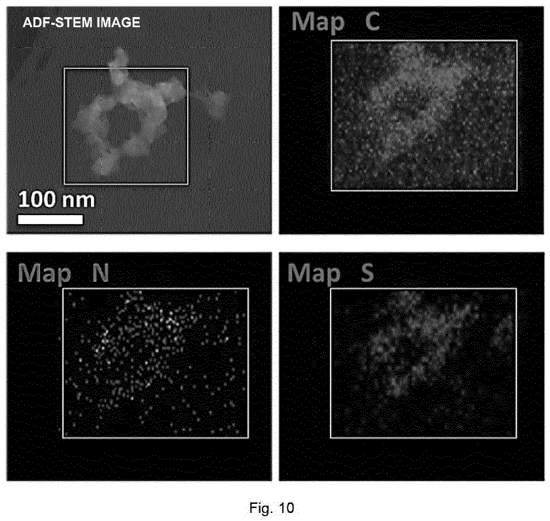

The distribution of each of the polymers inside the individual nanoparticles of the polymer obtained by the method described in example 1 was determined by means of dispersive X-ray spectroscopy (performed during the analysis by high-resolution transmission electron microscopy). Figure 10 shows the distribution of carbon (present in the three polymers), nitrogen (present in polypyrrole) and sulfur (present in lignin) contained in the polymer nanoparticles, reaching the conclusion that the three polymers are homogeneously distributed (interpenetrated polymer networks) in the nanoparticles.

### Example 4

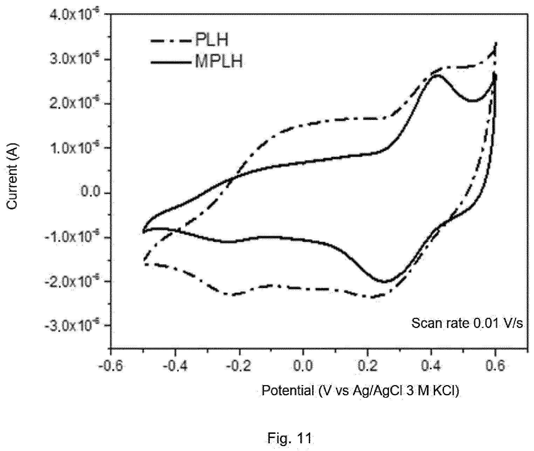

Thin-film electrodes were prepared, which made it possible to study the electrochemical properties of the nanoparticulate material containing or not containing the cellulose component, in the solid state and in an acid aqueous medium, applying cyclic voltammetry at a scan rate of 0.01 V/s (Figure 11). These measurements made it possible to infer that the material is electrochemically active, and that the macromolecular network of lignin biopolymer was successfully incorporated into the nanoparticle structure, since both the nanoparticulate sample with three polymers in its composition (MPLH) and the sample containing only polypyrrole and lignin (PLH) have shown redox processes corresponding to the quinone groups present in the lignin. Furthermore, an oxidation-reduction process has also been evidenced that we assign to the polypyrrole, also present in both electroactive materials. These results prove the electroactive properties of the particulate materials developed, in addition to the possibility of applying them in the storage of electrochemical energy also forming part of solid electrodes.

### Example 5

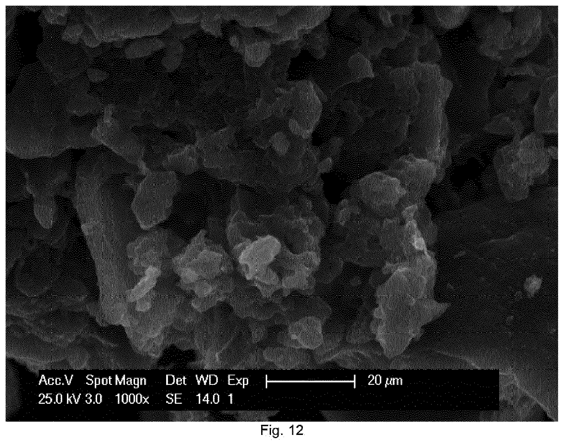

The sulfur content of the biopolymer in accordance with the amount of lignin has a crucial impact on the final structure of the nanoparticulate polymer material constituted by the three functional macromolecular networks and also on its stability in an aqueous medium. The sample composed of the three polymers: lignin + polypyrrole + methylcellulose, but with lignin having a molar sulfur content with a value of 2.5% compared to 3.75% molar present in the nanoparticulate polymer material obtained using the method described in example 1 (MPLH), is organized in a hierarchical structure identical to that of the nanoparticulate polymer material MPLH. Although both electroactive materials have a similar nanoparticulate structure, the stability of the nanoparticulate material containing lignin with a sulfur percentage of 2.5% in the aqueous medium is three days, while the stability of MPLH is one week. When the molar sulfur content of the biopolymer decreases to a value equal to or less than 1%, the polymer compound does not have a particulate structure, but rather it is a polymer material with a continuous structure consisting of shapeless aggregates and a defined organization, and it is not possible to achieve dispersions of polymer nanoparticles neither in the aqueous nor organic phase (Figure 12).

### Example 6.

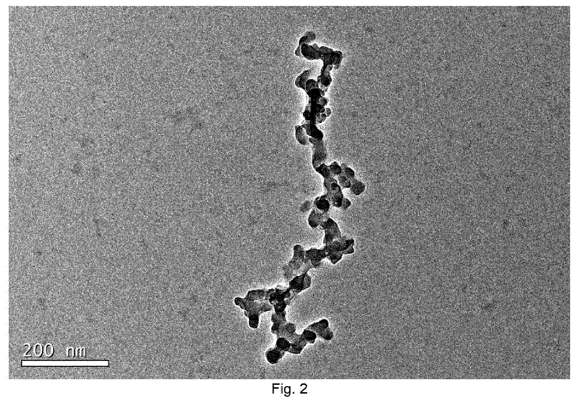

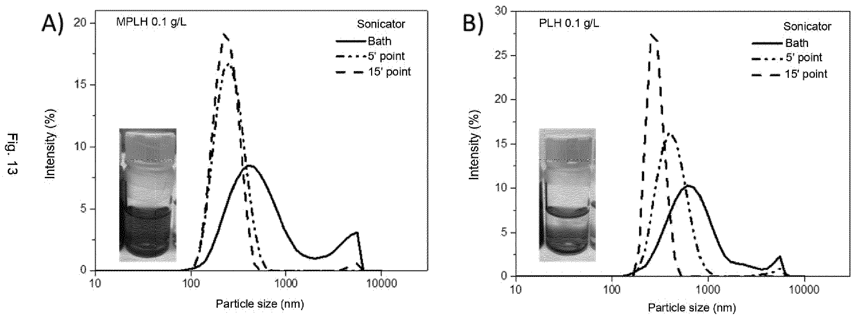

The new nanoparticulate polymers obtained using the method of example 1 (Figures 1 to 3) have greater stability in water over time in comparison to the hybrid and/or compound materials composed solely of lignin and polypyrrole (Figures 7 to 9). Due to the presence of methylcellulose in the polymer material nanoparticles, the use of surfactants, emulsifiers or other type of chemical agent is not required to stabilize the suspensions of nanoparticles in the aqueous phase. Stable concentrations of up to 5 g/l for more than one month were obtained. The presence of sulfur in the biopolymer (lignin) also induces an increase and/or improvement in the solubility and dispersibility of the compound polymer nanoparticles. Furthermore, the size distribution of the particles studied by dynamic light scattering (Figure 13) coincides with the size of the aggregates evidenced by the application of transmission electron microscopy shown in Figures 2, 3, 8 and 9. It can be clearly observed in Figure 13 B how the absence of cellulose affects the stability of the nanoparticle suspension, which precipitates at the bottom of the flask over time, despite the fact that the size distribution of particle aggregates containing two polymers, polypyrrole and lignin (PLH) is in the same order of magnitude as the compound nanoparticles consisting of the three polymers (MPLH) (Figure 13 A).

### Example 7.

The nanopores in the polymer nanoparticles containing the three polymers will significantly increase the surface/volume ratio of the nanoparticles. Furthermore, this property will facilitate the molecular contact between the nanoparticle surface and different chemical species such as water, carbon dioxide, oxygen and hydrogen, inter alia. This property will also facilitate the course of the catalytic and electrochemical reactions in comparison with other materials wherein they are limited due to the presence of interfaces and a solid surface.

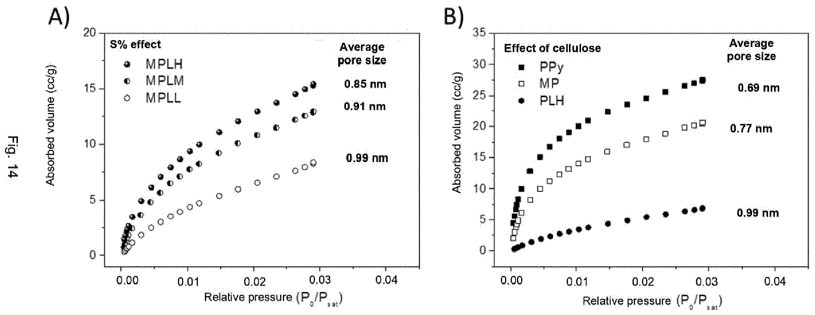

Figure 14 shows a comparison between different adsorption isotherms for a series of polymer compound particles. The isotherms clearly show the impact of the composition of the hybrid on gas adsorption capacity and, as expected, a trend between the volume of adsorbed gas, pore size and surface area. Significant differences such as the effect of the content of sulfonic groups (% sulfur) on the pore size of the particles of electroactive material can be observed (Figure 14 A). It can be clearly observed that, on decreasing the % of S, the pore size increases from 0.85 nm in the MPLH material to 0.99 nm in the MPLL material. The presence of cellulose in the pore size of the nanoparticles of material composed of the three polymers also has a clear impact, evidencing a size of 0.85 nm in the presence thereof (MPLH) and an increase of up to 1 nm when it is absent (PLH) (Figure 14 B). Lastly, the presence of methylcellulose combined with the polypyrrole (MP) causes an increase in pore size of 0.69 nm (PPy) up to 0.77 nm (MP) (Figure 14 B).

### Example 8.

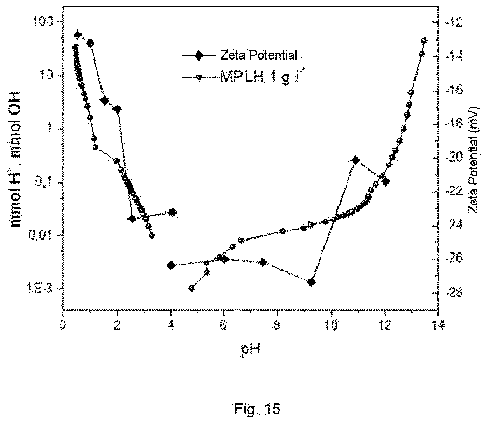

Figure 15 shows the acid-base properties of an aqueous suspension of 1 g/l of compound polymer nanoparticles obtained according to example 1 and characterized according to examples 2 to 3, in accordance with the pH and measurements of the different surface potentials obtained from zeta potential measurements. Two clear ionization potentials were evidenced at acid pH (1.5) and another at basic pH (9), which coincide with the changes in the net surface charge of the nanoparticles obtained from the zeta potential measurements of a MPLH suspension at different pH.

The properties exhibited by the new nanoparticulate materials described in this and preceding examples make them adequate for implementation as multifunctional electrode material in applications such as electrocatalysis, production of non-fossil fuels, conversion and storage of energy and capture and transport of CO₂ (or other greenhouse gases).

### Example 9.

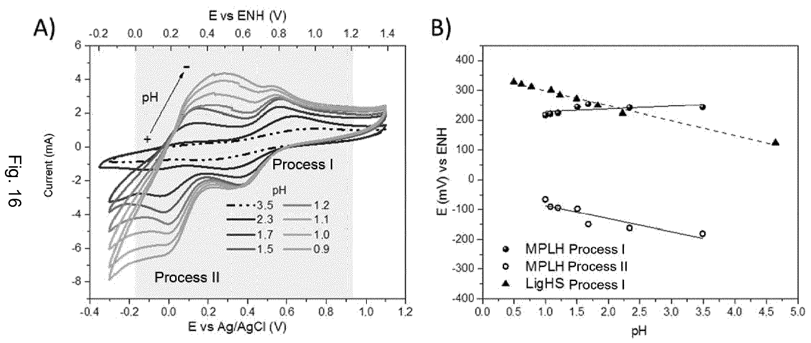

Use of an electrochemically active nanoparticulate polymer described in example 1 and 2, as an electrolyte in supercapacitors and redox flow batteries. Figure 16 A shows the electrochemical properties of a polymer nanoparticle suspension (1 g/l) stable in an aqueous medium, without presence of additives. Figure 16 A shows a reversible electrochemical process at around 0.5 V versus the Ag/AgCI reference electrode corresponding to the electrochemical oxidation and reduction of the quinone groups present in the lignin. This property will facilitate the application of these nanoparticles as an electrolyte, more specifically as an anolyte, in redox flow batteries.

### Example 10.

Use of the nanoparticles obtained according to the method of obtaining described in example 1 and described in examples 2 and 3 for the simultaneous conversion of hydrogen and electrochemical storage of energy. Adding CO₂ and acid to the suspension of polymer nanoparticles causes the appearance of a second reversible electrochemical process (centered at around 0.1 V versus the Ag/AgCI reference electrode) corresponding to the reversible formation of hydrogen, as indicated in Figure 16 A. The simultaneous existence of both reversible electrochemical processes in the aqueous phase would facilitate the production of hydrogen (a non-fossil and therefore "clean" fuel) and the electrochemical storage of energy simultaneously in the same electrochemically active hierarchical structure. Figure 16 B shows the pH dependence of each of the electrochemical processes.

### Example 11.

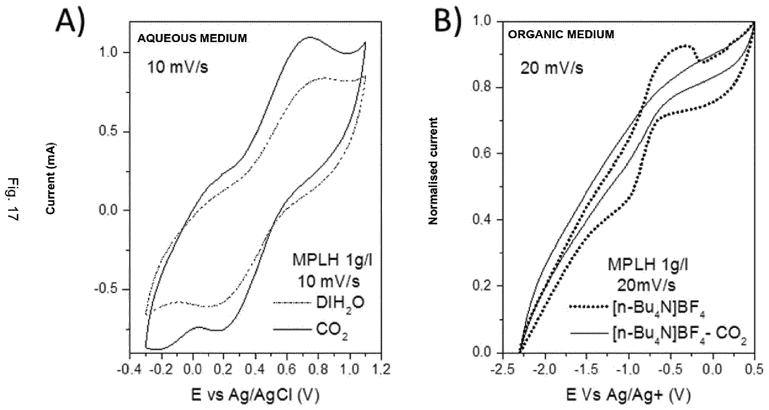

Use of the nanoparticulate polymer for electrochemical CO₂ capture and transport in an aqueous medium and organic medium (Figure 17). The electrochemical capture of the CO₂ molecules takes place in an aqueous medium using only deionized water as a solvent (Figure 17 A) and in an organic medium in the presence of acetonitrile as an organic solvent (Figure 17 B). The addition of CO₂ gas to a suspension of nanoparticles dispersed in deionized water and the subsequent application of a current to achieve the electrochemical reduction of the quinone groups present in the lignin enables the reversible reaction of these groups with the CO₂ molecule. This reaction gives rise to the formation of a carbonated organic polymer compound which, via electrochemical oxidation, reforms the redox groups of the lignin to its quinone form, while simultaneously returning the CO₂ to the reaction medium. The shift in the maximum current value corresponding to the electrochemical potential of the redox processes observed in the cyclic voltammetry at 20 mV/s without and in the presence of CO₂ gas confirms the electrochemical capture of CO₂ in water using the electroactive nanoparticulate material developed (Figure 17 A). A similar experiment (Figure 17 B) also confirms the possibility of electrochemically capturing CO₂ gas in an organic medium using the same scan rate, 20 mV/s, and in the presence of a support organic salt such as tetrabutylammonium tetrafluoroborate dissolved in acetonitrile. The electrochemical capture of CO₂ has major economic implications, since the technology currently used does not have a positive energy balance, making it necessary to apply temperature to obtain the CO₂ gas after being captured. Furthermore, capture in an aqueous medium with the nanoparticles in suspension will make it possible to easily transport the carbonated material either via ducts (pipes) or in tank trucks to the place where the stage of converting CO₂ into chemical products with high added value is carried out.

## Claims

1. A method for obtaining an electrochemically active nanoparticulate polymer material, **characterized in that** it comprises the following stages:
a) dissolving an amount expressed as a percentage by weight of the final total weight of the nanoparticulate polymer material between 10% and 70% of methylcellulose in deionized water at a temperature between 50°C and 70°C under agitation at revolutions between 50 rpm and 1,500 rpm and, once dissolved, cooling at a temperature between 5°C and 35°C;
b) adding an amount expressed as a percentage by weight of the final total weight of the nanoparticulate polymer material between 10% and 70% of sulfonated lignin in the solution obtained in stage (a);
c) adding an amount expressed as a percentage by weight of the final total weight of the nanoparticulate polymer material between 10% and 70% of pyrrole drop by drop to the solution obtained in stage (b) and, next, adding a catalyst of the polymerization reaction and agitating at revolutions between 50 rpm and 1,500 rpm for a period of time between 5 h and 7 h;
d) purifying the mixture obtained in stage (c);
e) washing the gel phase obtained in stage (d);
f) repeating stages (d) and (e) at least three times; and
g) drying the gel phase obtained in stage (f).

2. The method according to claim 1, wherein the sulfonated lignin has a percentage of sulfur between 2.5% and 5% by weight of the total amount of lignin.

3. The method according to any of claims 1 or 2, wherein the sulfonated lignin has a percentage of sulfur between 3.5 % and 5% by weight of the total amount of lignin.

4. The method according to any of claims 1 to 3, wherein the catalyst added in stage (c) is selected from FeCl₃, CuCl₂, Fe(SO₄)₃, K₃Fe(CN)₆, Fe(NO)₃·9H₂O,Cu(NO₃)₂, Cu(NO)₂-AlCl₃, Ag(NO₃), para-toluenesulfonic acid, organic or alkali metal salts of the persulfate and sodium dodecyl sulfate anion.

5. The method according to any of claims 1 to 4, wherein the purification of stage (d) is carried out by gelation at a temperature between 80°C and 90°C for a period of time between 80 min and 100 min, and the gel phase is subsequently separated from the aqueous phase.

6. The method according to any of claims 1 to 5, wherein the washing of stage (e) is carried out using deionized water and with centrifugation at a speed between 1,000 rpm and 10,000 rpm for 10 min, and the gel phase is subsequently separated from the liquid phase.

7. The method according to any of claims 1 to 6, wherein the drying of phase (g) is carried out by lyophilization.

8. The method according to claim 7, wherein lyophilization comprises the stages of
i) freezing the material purified and washed after stage (f) at a temperature between -195.8°C and 0°C;
ii) drying the sample obtained in stage (i) in a vacuum at a pressure between 10⁻¹ mbar and 10⁻⁶ mbar; and
iii) dehydrating the sample obtained in stage (ii) in a vacuum at a pressure between 10⁻¹ mbar and 10⁻⁶ mbar.

9. An electrochemically active nanoparticulate polymer material, obtained according to the method described according to any of claims 1 to 8.

10. The electrochemically active nanoparticulate polymer material **characterized in that** it has a pore size between 0.80 nm and 0.99 nm; and **in that** it comprises a plurality of nanoparticles and a plurality of said nanoparticle aggregates, wherein the size of the nanoparticle aggregates is between 100 nm and 250 nm, and wherein the nanoparticles have a size between 1 nm and 20 nm, the material has a hierarchical morphology and wherein the nanoparticles and their aggregates are formed from the following polymers:
• a first methylcellulose polymer, in the form of nanofibres;
• a second polypyrrole polymer; and
• a third sulfonated lignin polymer;
wherein the total sum of the percentage by weight of the first, second and third polymer is 100%;
and wherein said hierarchical morphology is a structure that follows an essentially longitudinal direction having a size between 200 nm and 2 µm, and another that follows an essentially transverse direction having a size between 200 nm and 400 nm, wherein the nanoparticles are randomly arranged along the essentially longitudinal direction and are joined together by means of the nanofibres of the first polymer, and the nanoparticle aggregates are arranged in an essentially transverse manner to the essentially longitudinal direction.

11. The electrochemically active nanoparticulate polymer material according to claim 10, wherein the first methylcellulose polymer is in a proportion by weight of the total weight of the nanoparticulate polymer material between 10% and 70%; the second polypyrrole polymer is in a proportion by weight of the total weight of the nanoparticulate polymer material between 10% and 70%; and the third sulfonated lignin polymer is in a proportion by weight of the total weight of the nanoparticulate polymer material between 10% and 70%.

12. The electrochemically active nanoparticulate polymer material according to any of claims 10 or 11, wherein the third sulfonated lignin polymer has a percentage by weight of sulfur between 2.5% and 5% of the total amount of lignin, and preferably has a percentage by weight of sulfur between 3.5% and 5%.

13. The electrochemically active nanoparticulate polymer material, according to any of claims 10 to 12, wherein the surface area of the polymer material is between 10 m² and 230 m² measured by means of CO₂ gas adsorption.

14. The use of the electrochemically active nanoparticulate polymer material according to any of claims 9 to 13, as an electrolyte in redox batteries that use water as a solvent.

15. The use of the electrochemically active nanoparticulate polymer material according to any of claims 9 to 13, as an active material in reversible CO₂ capture and transport reactions.

## Patentansprüche

1. Verfahren zum Erhalten eines elektrochemisch aktiven nanopartikulären Polymermaterials, **dadurch gekennzeichnet, dass** es die folgenden Stufen umfasst:
a) Auflösen einer als Gewichtsprozentsatz ausgedrückten Menge des abschließenden Gesamtgewichts des nanopartikulären Polymermaterials zwischen 10 % und 70 % Methylcellulose in entionisiertem Wasser bei einer Temperatur zwischen 50°C und 70°C unter Rühren bei Umdrehungen zwischen 50 U/min und 1.500 U/min und, nach dem Auflösen, Kühlen bei einer Temperatur zwischen 5°C und 35°C;
b) Zugeben einer als Gewichtsprozentsatz ausgedrückten Menge des abschließenden Gesamtgewichts des nanopartikulären Polymermaterials zwischen 10 % und 70 % sulfoniertem Lignin in der in Stufe (a) erhaltenen Lösung;
c) Zugeben einer als Gewichtsprozentsatz ausgedrückten Menge des abschließenden Gesamtgewichts des nanopartikulären Polymermaterials zwischen 10 % und 70 % Pyrrol tröpfchenweise zu der in Stufe (b) erhaltenen Lösung und danach, Zugeben eines Katalysators der Polymerisationsreaktion und Rühren bei Umdrehungen zwischen 50 U/min und 1500 U/min für einen Zeitraum zwischen 5 h und 7 h;
d) Reinigen der in Stufe (c) erhaltenen Mischung;
e) Waschen der in Stufe (d) erhaltenen Gelphase;
f) Wiederholen der Stufen (d) und (e) mindestens dreimal; und
g) Trocknen der in Stufe (f) erhaltenen Gelphase.

2. Verfahren nach Anspruch 1, wobei das sulfonierte Lignin einen Schwefelprozentsatz zwischen 2,5 und 5 Gew.-% der Gesamtligninmenge aufweist.

3. Verfahren nach einem der Ansprüche 1 oder 2, wobei das sulfonierte Lignin einen Schwefelprozentsatz zwischen 3,5 und 5 Gew.-% der Gesamtligninmenge aufweist.

4. Verfahren nach einem der Ansprüche 1 bis 3, wobei der in Stufe (c) zugegebene Katalysator ausgewählt ist aus FeCl₃, CuCl₂, Fe(SO₄)₃, K₃Fe(CN)₆, Fe(NO)₃·9H₂O,Cu(NO₃)₂, Cu(NO₃)₂·AlCl₃, Ag(NO₃), para-Toluolsulfonsäure, organischen oder Alkalimetallsalzen des Persulfats und Natriumdodecylsulfat-Anion.

5. Verfahren nach einem der Ansprüche 1 bis 4, wobei die Reinigung von Stufe (d) durch Gelieren bei einer Temperatur zwischen 80°C und 90°C für einen Zeitraum zwischen 80 Minuten und 100 Minuten ausgeführt wird und die Gelphase anschließend von der wässrigen Phase getrennt wird.

6. Verfahren nach einem der Ansprüche 1 bis 5, wobei das Waschen von Stufe (e) unter Verwendung von entionisiertem Wasser und unter Zentrifugation bei einer Drehzahl zwischen 1.000 U/min und 10.000 U/min für 10 Minuten ausgeführt wird und die Gelphase anschließend von der flüssigen Phase getrennt wird.

7. Verfahren nach einem der Ansprüche 1 bis 6, wobei das Trocknen von Phase (g) durch Lyophilisierung ausgeführt wird.

8. Verfahren nach Anspruch 7, wobei die Lyophilisierung die folgenden Stufen umfasst
i) Einfrieren des gereinigten und gewaschenen Materials nach Stufe (f) bei einer Temperatur zwischen -195,8°C und 0°C;
ii) Trocknen der in Stufe (i) erhaltenen Probe im Vakuum bei einem Druck zwischen 10⁻¹ mbar und 10⁻⁶ mbar; und
iii) Entwässern der in Stufe (ii) erhaltenen Probe im Vakuum bei einem Druck zwischen 10⁻¹ mbar und 10⁻⁶ mbar.

9. Elektrochemisch aktives nanopartikuläres Polymermaterial, erhalten gemäß dem Verfahren, das nach einem der Ansprüche 1 bis 8 beschrieben wird.

10. Elektrochemisch aktives nanopartikuläres Polymermaterial, **dadurch gekennzeichnet, dass** es eine Porengröße zwischen 0,80 nm und 0,99 nm aufweist; und dadurch, dass es eine Vielzahl von Nanopartikel und eine Vielzahl der Nanopartikel-Aggregate umfasst, wobei die Größe der Nanopartikel-Aggregate zwischen 100 nm und 250 nm beträgt und wobei die Nanopartikel eine Größe zwischen 1 nm und 20 nm aufweisen, das Material eine hierarchische Morphologie aufweist und wobei die Nanopartikel und deren Aggregate aus den folgenden Polymeren gebildet sind:
• einem ersten Methylcellulose-Polymer in Form von Nanofasern;
• einem zweiten Polypyrrol-Polymer; und
• einem dritten sulfonierten Ligninpolymer;
wobei die Gesamtsumme des Gewichtprozentsatzes des ersten, zweiten und dritten Polymers 100 % beträgt;
und wobei die hierarchische Morphologie eine Struktur ist, die im Wesentlichen einer Längsrichtung mit einer Größe zwischen 200 nm und 2 µm folgt, und eine andere, die einer im Wesentlichen transversalen Richtung mit einer Größe zwischen 200 nm und 400 nm folgt, wobei die Nanopartikel im Wesentlichen entlang der Längsrichtung zufällig angeordnet und mittels der Nanofasern des ersten Polymers zusammengefügt sind und die Nanopartikel-Aggregate im Wesentlichen quer zur im Wesentlichen Längsrichtung angeordnet sind.

11. Elektrochemisch aktives nanopartikuläres Polymermaterial nach Anspruch 10, wobei das erste Methylcellulosepolymer in einem Gewichtsanteil des Gesamtgewichts des nanopartikulären Polymermaterials zwischen 10 % und 70 % vorliegt; das zweite Polypyrrolpolymer in einem Gewichtsanteil des Gesamtgewichts des nanopartikulären Polymermaterials zwischen 10 % und 70 % vorliegt; und das dritte sulfonierte Ligninpolymer in einem Gewichtsanteil des Gesamtgewichts des nanopartikulären Polymermaterials zwischen 10 % und 70 % vorliegt.

12. Elektrochemisch aktives nanopartikuläres Polymermaterial nach einem der Ansprüche 10 oder 11, wobei das dritte sulfonierte Ligninpolymer einen Gewichtsprozentsatz an Schwefel zwischen 2,5 % und 5 % der Gesamtmenge an Lignin aufweist und vorzugsweise einen Gewichtsprozentsatz an Schwefel zwischen 3,5 % und 5 % aufweist.

13. Elektrochemisch aktives nanopartikuläres Polymermaterial nach einem der Ansprüche 10 bis 12, wobei die Oberfläche des Polymermaterials zwischen 10 m² und 230 m² beträgt, gemessen mittels CO2-Gasadsorption.

14. Verwendung des elektrochemisch aktiven nanopartikulären Polymermaterials nach einem der Ansprüche 9 bis 13 als ein Elektrolyt in Redox-Batterien, die Wasser als Lösungsmittel verwenden.

15. Verwendung des elektrochemisch aktiven nanopartikulären Polymermaterials nach einem der Ansprüche 9 bis 13 als aktives Material in reversiblen CO2-Abfang- und -Transportreaktionen.

## Revendications

1. Procédé d'obtention d'un matériau polymère nanoparticulaire électrochimiquement actif, **caractérisé en ce qu'**il comprend les étapes suivantes :
a) la dissolution d'une quantité exprimée sous forme d'un pourcentage en poids du poids total final du matériau polymère nanoparticulaire comprise entre 10 % et 70 % de méthylcellulose dans de l'eau désionisée à une température comprise entre 50 °C et 70 °C sous agitation à une vitesse de rotation comprise entre 50 tr/min et 1 500 tr/min et, une fois dissoute, le refroidissement à une température comprise entre 5 °C et 35 °C ;
b) l'ajout d'une quantité exprimée sous forme d'un pourcentage en poids du poids total final du matériau polymère nanoparticulaire comprise entre 10 % et 70 % de lignine sulfonée dans la solution obtenue à l'étape (a) ;
c) l'ajout goutte à goutte d'une quantité exprimée sous forme d'un pourcentage en poids du poids total final du matériau polymère nanoparticulaire comprise entre 10 % et 70 % de pyrrole à la solution obtenue à l'étape (b) et, ensuite, l'ajout d'un catalyseur de la réaction de polymérisation et l'agitation à une vitesse de rotation comprise entre 50 tr/min et 1 500 tr/min pendant une durée comprise entre 5 h et 7 h ;
d) la purification du mélange obtenu à l'étape (c) ;
e) le lavage de la phase de gel obtenue à l'étape (d) ;
f) la répétition des étapes (d) et (e) au moins trois fois ; et
g) le séchage de la phase de gel obtenue à l'étape (f).

2. Procédé selon la revendication 1, dans lequel la lignine sulfonée a un pourcentage de soufre compris entre 2,5 % et 5 % en poids de la quantité totale de lignine.

3. Procédé selon l'une quelconque des revendications 1 ou 2, dans lequel la lignine sulfonée a un pourcentage de soufre compris entre 3,5 % et 5 % en poids de la quantité totale de lignine.

4. Procédé selon l'une quelconque des revendications 1 à 3, dans lequel le catalyseur ajouté à l'étape (c) est choisi parmi FeCl₃, CuCl₂, Fe(SO₄)₃, K₃Fe(CN)₆, Fe(NO)₃·9H₂O,Cu(NO₃)₂, Cu(NO₃)₂·AlCl₃, Ag(NO₃), l'acide para-toluènesulfonique, les sels organiques ou de métaux alcalins du persulfate et l'anion dodécylsulfate de sodium.

5. Procédé selon l'une quelconque des revendications 1 à 4, dans lequel la purification de l'étape (d) est effectuée par gélification à une température comprise entre 80 °C et 90 °C pendant une durée comprise entre 80 min et 100 min et la phase de gel est par la suite séparée de la phase aqueuse.

6. Procédé selon l'une quelconque des revendications 1 à 5, dans lequel le lavage de l'étape (e) est effectué à l'aide d'eau désionisée et avec une centrifugation à une vitesse comprise entre 1 000 tr/min et 10 000 tr/min pendant 10 min et la phase de gel est par la suite séparée de la phase liquide.

7. Procédé selon l'une quelconque des revendications 1 à 6, dans lequel le séchage de la phase (g) est effectué par lyophilisation.

8. Procédé selon la revendication 7, dans lequel la lyophilisation comprend les étapes de
i) congélation du matériau purifié et lavé après l'étape (f) à une température comprise entre -195,8 °C et 0 °C ;
ii) séchage de l'échantillon obtenu à l'étape (i) sous vide à une pression comprise entre 10⁻¹ mbar et 10⁻⁶ mbar ; et
iii) déshydratation de l'échantillon obtenu à l'étape (ii) sous vide à une pression comprise entre 10⁻¹ mbar et 10⁻⁶ mbar.

9. Matériau polymère nanoparticulaire électrochimiquement actif, obtenu selon le procédé décrit selon l'une quelconque des revendications 1 à 8.

10. Matériau polymère nanoparticulaire électrochimiquement actif **caractérisé en ce qu'**il a une taille des pores comprise entre 0,80 nm et 0,99 nm ; et **en ce qu'**il comprend une pluralité de nanoparticules et une pluralité d'agrégats desdites nanoparticules, dans lequel la taille des agrégats de nanoparticules est comprise entre 100 nm et 250 nm et dans lequel les nanoparticules ont une taille comprise entre 1 nm et 20 nm, le matériau a une morphologie hiérarchique et dans lequel les nanoparticules et leurs agrégats sont formés à partir des polymères suivants :
• un premier polymère méthylcellulose, sous la forme de nanofibres ;
• un deuxième polymère polypyrrole ; et
• un troisième polymère lignine sulfonée ;
dans lequel la somme totale des pourcentages en poids des premier, deuxième et troisième polymères est de 100 % ;
et dans lequel ladite morphologie hiérarchique est une structure qui suit une direction essentiellement longitudinale ayant une taille comprise entre 200 nm et 2 µm et une autre qui suit une direction essentiellement transversale ayant une taille comprise entre 200 nm et 400 nm, dans lequel les nanoparticules sont agencées aléatoirement le long de la direction essentiellement longitudinale et sont réunies au moyen des nanofibres du premier polymère et les agrégats de nanoparticules sont agencés d'une manière essentiellement transversale par rapport à la direction essentiellement longitudinale.

11. Matériau polymère nanoparticulaire électrochimiquement actif selon la revendication 10, dans lequel le premier polymère méthylcellulose est en une proportion en poids du poids total du matériau polymère nanoparticulaire comprise entre 10 % et 70 % ; le deuxième polymère polypyrrole est en une proportion en poids du poids total du matériau polymère nanoparticulaire comprise entre 10 % et 70 % ; et le troisième polymère lignine sulfonée est en une proportion en poids du poids total du matériau polymère nanoparticulaire comprise entre 10 % et 70 %.

12. Matériau polymère nanoparticulaire électrochimiquement actif selon l'une quelconque des revendications 10 ou 11, dans lequel le troisième polymère lignine sulfonée a un pourcentage en poids de soufre compris entre 2,5 % et 5 % de la quantité totale de lignine, et a de préférence un pourcentage en poids de soufre compris entre 3,5 % et 5 %.

13. Matériau polymère nanoparticulaire électrochimiquement actif, selon l'une quelconque des revendications 10 à 12, dans lequel la surface spécifique du matériau polymère mesurée au moyen de l'adsorption de CO₂ gazeux est comprise entre 10 m² et 230 m².

14. Utilisation du matériau polymère nanoparticulaire électrochimiquement actif selon l'une quelconque des revendications 9 à 13, comme électrolyte dans des batteries redox qui utilisent de l'eau comme solvant.

15. Utilisation du matériau polymère nanoparticulaire électrochimiquement actif selon l'une quelconque des revendications 9 à 13, comme matériau actif dans des réactions réversibles de capture et de transport de C02.
